Europäisches Patentamt

European Patent Office

Office européen des brevets

(19)

(11) Veröffentlichungsnummer: **0 293 433**
**B1**

(12) **EUROPÄISCHE PATENTSCHRIFT**

(45) Veröffentlichungstag der Patentschrift: **06.06.90**

(21) Anmeldenummer: **88900038.6**

(22) Anmeldetag: **11.12.87**

(86) Internationale Anmeldenummer:
**PCT/HU87/00057**

(87) Internationale Veröffentlichungsnummer:
**WO 88/04240 16.06.88 Gazette 88/13**

(51) Int. Cl.⁵: **B 60 H 1/26, B 61 D 27/00**

(54) **LUFTVERTEILUNGSKANAL ZUR KÜHLUNG, HEIZUNG UND BELÜFTUNG DES INNENRAUMES VON KLIMATISIERTEN FAHRZEUGEN.**

(30) Priorität: **12.12.86 HU 518986**

(43) Veröffentlichungstag der Anmeldung:
**07.12.88 Patentblatt 88/49**

(45) Bekanntmachung des Hinweises auf die
Patenterteilung:
**06.06.90 Patentblatt 90/23**

(84) Benannte Vertragsstaaten:
**AT BE CH DE FR GB IT LI LU NL SE**

(56) Entgegenhaltungen:
**AT-B- 379 556
DE-A-1 580 013
DE-A-1 680 793
DE-A-2 758 999
DE-A-3 302 424
DE-B-2 634 715
FR-A-1 073 384
US-A-3 675 566**

(73) Patentinhaber: **SZECHENYI ISTVAN
KOZLEKEDESI ES TAVKOZLESI MUSZAKI
FOISKOLA
Sagvari E.u.3
H-9026 Györ (HU)**

(73) Patentinhaber: **Ikarus Karosszéria és Jármügyar
Matyásföld Margit Utca 2
H-1165 Budapest XVI (HU)**

(72) Erfinder: **VERMES, goston
Csaba u. 5
H-9023 Gyo "r (HU)**

(74) Vertreter: **Patentanwälte Viering & Jentschura
Steinsdorfstrasse 6
D-8000 München 22 (DE)**

# Beschreibung

Die Erfindung betrifft einen Luftverteilungskanal zur Kühlung, Heizung und Belüftung des Innenraumes von klimatisierten Fahrzeugen, welcher Kanal an die Klimaanlage dieser Fahrzeuge angeschlossen ist.

Die modernen Verkehrsmittel, vor allem die Autobusse sind heutzutage kaum mehr ohne Klimaanlagen vorstellbar, die einen Fahrgastkomfort hohen Niveaus gewährleisten. Das thermische Komfortgefühl ist neben einer Reihe von messbaren physikalischen Parametern bekanntlich auch von bestimmten physiologischen Faktoren abhängig und insbesondere bei Autobussen sollen die mit den L'etzteren im Zusammenhang stehenden sogenannten intermediären Fahrgastkomfortbedingungen weitgehend in Rücksicht genommen werden. Von den das thermische Komfortgefühl gewährleistenden physikalischen Parametern sind in erster Linie

—die Temperatur des Innenraumes,

—die Temperatur der umgebenden Flächen,

—der relative Feuchtigkeitsgehalt der Luft,

—die Geschwindigkeit der inneren Luftströmung und

—die Richtung der Luftströmung hervorzuheben.

Die Anforderungen bezüglich der aufgezählten physikalischen Parameter sind in der Fahrzeugklimatechnik ganz anders als in der "stationären Klimatechnik", die bei der Gebäudeinstallation zur Anwendung kommt

So beträgt zum Beispiel

—die höchstzulässige Abweichung der Luft- und der Wand-temperatur in einem Büro 4 K während in einem Fahrzeug 20 K,

—die maximale Luftgeschwindigkeit des inneren Luftraumes in einem Büro 0,2 m/s, während im Fahrzeug 1 m/s,

—die höchstzulässige Luftgeschwindigkeit in dem Luftverteilungskanal (Belüftungskanal) eines Gebäudes 5 m/s, während in dem Luftverteilungskanal eines Fahrzeuges 20 m/s.

Diese offensichtlichen Kompromisswerte bei den Fahrzeugen sind aus den beschränkten Raum- und Massenverhältnissen der Fahrzeuge abzuleiten.

Es gibt dabei jedoch solche physikalische Parameter, bei denen die physiologischen Auswirkungen eindeutige Schranken bezüglich der verwendbaren Werte im Klimasystem stellen.

Einer der wichtigsten Parameter in dieser Hinsicht ist die Differenz der Temperatur der in den Fahrgastraum eingeblasenen Heiz- oder Kühlluft und der Fahrgastraumtemperatur, genauer gesagt, der Absolutwert dieser Differenz. Im Falle einer vorgegebenen stündlich zuzuführenden (oder abzuziehenden) Wärmemenge $\bar{Q}$ und einer vorgegebenen stündlich eingeblasenen Luftmenge $\dot{V}$ kann die gewünschte Temperaturstufe $\Delta t$ nach der folgenden Formel berechnet werden:

$$\Delta t = \frac{\bar{Q}}{\dot{V} \cdot \mathcal{S} \cdot C_p} \quad (K)$$

wobie

$\mathcal{S}$ =die Dichte der Luft,

$C_p$=die spezifische Wärme der Luft bedeutet.

Es folgt daraus, dass die gewünschte Temperaturstufe $\Delta t$ eine hyperbolische Funktion der stündlich gelieferten Luftmenge ist.

Bei Heizung mit Warmluft (Luftheizung) bedeutet dieser Zusammenhang noch kein Problem, nachdem dort sogar eine Temperaturstufe von 40 bis 50 K ertragbar ist. Bei Kühlbetriebsweise ist das Problem umso grösser, weil hier nur eine Temperaturstufe von 6—7 K physiologisch zugelassen ist, nachdem das Ausblasen der Kühlluft auf den menschlichen Körper ein erhöhtes Zugempfinden verursacht. Es folgt jedoch aus der hyperbolischen Funktion, dass im Falle einer geringen Temperaturstufe das Abziehen der Vorgesehenen stündlichen Wärmemenge $\bar{Q}$ nur mit einer hohen Ventilationsleistung erfolgen kann, falls die einströmende Kühlluft direkt in den Fahrgastraum gelangt. Die heutzutage allgemein bekannten, an die Klimaanlage angeschlossenen Luftverteilungskanäle sind so ausgebildet, dass sie beidseitig unter dem Dach (bzw. gegebenenfalls in der Bodenhöhe) in Längsrichtung verlaufend über dachseitige, fensterseitige sowie persönliche Einblaseöffnungen (Düsen) die durch die Ventilatoren der Klimaanlage gelieferte Luft direkt in den Fahrgastraum führen.

Ein wesentlicher Nachteil dieser Ausführung besteht unter anderem darin, dass die aus der überwiegend im hinteren Teil des Fahrzeuges angebrachten Klimaanlage kommende Kühlluft die vorne sitzenden Personen, insbesondere den Fahrer, kaum oder gar nicht erreicht bzw. die Kühlluft in dem Luftverteilungskanal sich dermassen erwärmt, dass sie ihre Kühlwirkung verliert. Ein weiterer bedeutender Nachteil der obigen Ausführung besteht darin, dass sie aus den schon erwähnten physiologischen Gründen die Anwendung einer intensiveren Kühlung nicht ermöglicht, deswegen wird bei der Kühlung eine wesentlich höhere Ventilationsleistung benötigt als bei der Heizung, was einen bedeutenden zusätzlichen Platzbedarf, Zusatzgewicht und vor allem Zusatzkosten bedeutet.

Die Aufgabe der Erfindung besteht in der Schaffung eines Luftverteilungskanals für klimatisierte Fahrzeuge, die die Anwendung einer grösseren Temperaturstufe bei der Kühlung und dadurch einer geringeren Ventilationsleistung in den Klimaanlagen der Fahrzeuge ermöglicht, wobei im ganzen Fahrgastraum eine gleichmässige Temperatur gewährleistet wird.

Die gestellte Aufgabe wird erfindungsgemäss durch einen an die Klimaanlage des Fahrzeuges angeschlossenen Luftverteilungskanal gelöst, dessen Innenraum durch eine horizontal verlaufende aus einem Material mit guter Wärmeleitfähigkeit gefertigte Trennwand auf einen oberen Primärkanal und einen unteren Sekundärkanal geteilt ist, in welchen die durch die Ventilatoren der Klimaanlage gelieferte Luft im Vergleich zueinander im Gegenstrom geleitet wird, wobei diese Kanäle an dem der Klimaanlage gegenüberliegenden Ende des Luftverteilungskanals über einen den Luftstrom um 180° umlenkenden Endbereich miteinander verbunden sind und wo die dachseitigen Einblaseöffnungen im Primärkanal, während die fensterseitigen und persönlichen Einblaseöffnungen im Sekundärkanal ausgebildet sind.

Im Interesse der Erhöhung der Effektivität der Kühlung ist es zweckmässig, wenn der Primärkanal eine vergrösserte konvektive Wärmeübertragungsfläche aufweist.

Es ist ebenfalls zweckmässig, wenn zur Ableitung des eventuell entstehenden Kondenswassers entlang des Primärkanals ein Kondenswasserableitkanal ausgebildet ist.

Schliesslich ist es im Interesse der besseren Verteilung der Heizluft im Heizbetriebsweise zweckmässig, wenn in die Trennwand des Primärkanals und des Sekundärkanals wenigstens ein aufklappbares Luftleitelement eingebaut ist.

Der Erfindung wird ausführlicher anhand eines Ausführungsbeispiels, mit Bezug auf die beigefügte Zeichnung erläutert.

In der Zeichnung zeigen

Fig. 1 einen schematischen Längsschnitt des erfindungsgemässen Luftverteilungskanals, und

Fig. 2 einen Querschnitt des Luftverteilungskanals gemäss Fig. 1 nach der Linie A—A.

In den Figuren der Zeichnung ist beispielsweise ein an die Klimaanlage 1 eines Autobusses angeschlossener erfindungsgemässer Luftverteilungskanal dargestellt, der unmittelbar unter dem Fahrzeugdach 2, entlang der Längsseiten des Fahrzeuges verläuft. Die Klimaanlage 1 selbst ist am hinteren Ende des Fahrzeuges, meistens auf dem Fahrzeugdach 2 angebracht und sie liefert mit Hilfe ihrer Ventilatoren den jeweiligen Ansprüchen entsprechend kalte oder warme Luft in den Fahrgastraum über die beiderseits verlaufenden Luftverteilungskanäle, während sie hinten, im Dachbereich zwischen den Luftverteilungskanälen die verbrauchte Luft absaugt.

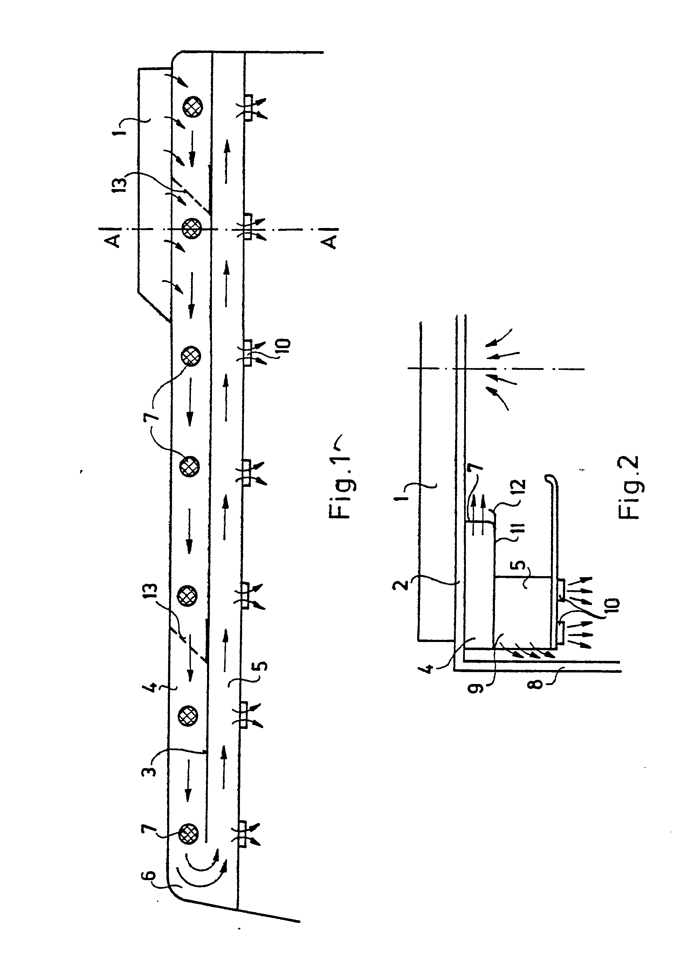

Wie es in Fig. 1 gut ersichtlich ist, ist der Innenraum des Luftverteilungskanals durch eine horizontal verlaufende, aus einem Material mit guter Wärmeleitfähigkeit gefertigte Trennwand 3 auf einen oberen Primärkanal 4 und einen unteren Sekundärkanal 5 aufgeteilt, wobei der Primärkanal 4 über einen der Klimaanlage 1 gegenüberliegenden Endbereich 6 des Luftverteilungskanals mit dem Sekundärkanal 5 verbunden ist, wodurch der durch die Ventilatoren der Klimaanlage 1 gelieferte Luftstrom nach einer Umlenkung von 180° im Endbereich 6 in den beiden Kanalteilen im Vergleich zueinander im Gegenstrom geleitet wird. Diese Ausführung hat zur Folge, dass in der Kühlbetriebsweise die im Primärkanal 4 strömende, sich allmählich erwärmende Luft über die Trennwand 3 mit der im Sekundärkanal 5 gerade in entgegengesetzter Richtung sich erwärmenden Luft in Berührung steht, also der kälteste Teil mit der wärmsten und der weniger kalte Teil mit der weniger warmen Teil, so dass sich letzten Endes im Sekundärkanal 5 infolge der Wechselwirkung mit dem Primärkanal 4 automatisch in der ganzen Länge eine gleichmässige Temperatur einstellt.

Auf der inneren Seite des Primärkanals 4 sind je nach Bedarf abschliessbare dachseitige Einblaseöffnungen 7 ausgebildet, während der Sekundärkanal 5 mit auf die Fahrzeugfenster 8 gerichteten fensterseitigen Einblaseöffnungen 9 und auf den Kopf der Fahrgäste gerichteten, an sich bekannten regelbaren persönlichen Einblaseöffnungen 10 versehen ist.

Mit der erfindungsgemässen Ausführung des Luftverteilungskanals wird es ermöglicht, dass die Ventilatoren der Klimaanlage 1 eine um 4—5 K kältere Luft in den Luftverteilungskanal hineinblasen, nachdem die aus dem Primärkanal 4 über die dachseitigen Einblaseöffnungen 7 in regelbarer Menge austretende kalte Luft die Fahrgäste unmittelbar nicht erreicht, also kein Zugempfinden verursacht. Andererseits strömt aus dem Sekundärkanal 5 auf die Fensterscheiben bzw. über die persönlichen Einblaseöffnungen 10 auf die Fahrgäste schon eine für das unmittelbare Einblasen in den Fahrgastraum zulässigen Temperaturstufe entsprechende Luft hinein, und zwar auf einer in der ganzen Länge des Fahrzeuges bzw. Sekundärkanals 5 gleichmässigen Temperatur. Dadurch, dass nun eine der bisherigen kältere Luft in den Luftverteilungskanal hineingeführt werden darf, kann die gleiche Kühlleistung mit einer geringeren Ventilationsleistung in den Fahrgastraum hineingebracht werden, entsprechend der in der Einführung beschriebenen Formel.

Die Effektivität der Kühlung kann verbessert werden, wenn der Primärkanal 4 durch ihre vergrösserte konvektive Wärmeübertragungsfläche 11 in einem Teil des Fahrgastraumdaches eine zusätzliche Kühlfläche bildet.

Die Ausbildung eines Teiles des Fahrgastraumdaches als konvektive Kühlfläche setzt selbstverständlich voraus, dass die Temperatur der gekühlten inneren Fläche immer höher ist als die Taupunkttemperatur des Dachraumes. Diese Voraussetzung kann in den meisten Fällen bei einer gut funktionierenden Klimaanlage 1 und entsprechender Regelung ohne weiteres erfüllt werden. Wo aber bestimmte ausserordentliche Umstände die Einhaltung dieser Voraussetzung nicht ermöglichen, dort ist die kalte Wandung des Primärkanals 4 zweckmässigerweise mit einem Kondenswasserableitkanal 12 versehen.

Im Gegensatz zum Primärkanal 4, der im Interesse der konvektiven Kühlung aus einem Material mit guter Wärmeleitfähigkeit gefertigt ist, wird der Sekundärkanal 5 zweckmässigerweise aus Kunststoff hergestellt, damit die konvektive Wärmeübertragung die Gleichmässigkeit der Wärmeverteilung nicht verschlechtert.

Bem Heizbetrieb im Winter kann der Primärkanal 4 durch Verstellen (Aufklappen) von einem oder mehreren, in die Trennwand 3 eingebauten, zweckmässigerweise in Form von Klappen ausgebildeten Luftleitelementen 13 wenigstens teilweise ausgeschaltet werden, wodurch die warme Luft unmittelbar in dem Sekundärkanal 5 geleitet werden kann. Der erfindungsgemässe Luftverteilungskanal kann in dieser Weise in Kühl- und Heizbetriebsweise gleichfalls mit optimalen Parametern betrieben werden. Die Luftleitelemente 13 können sowohl für manuelle als auch für maschinelle Betätigung ausgebildet werden.

Dadurch, dass die dachseitigen Einblaseöffnungen 7 des Primärkanals 4 abschliessbar sind, kann der Primärkanal 4 bei bestimmten Temperaturverhältnissen auch zu einer geringfügigen Vorwärmung der belüftenden Frischluft eingesetzt werden, ohne die Verwendung von irgendwelchen anderen Wärmetauschern.

Der erfindungsgemässe Luftverteilungskanal ermöglicht infolge der verwendbaren grösseren Temperaturstufe bei der Kühlung die Einsparung einer bedeutenden Ventilatorkapazität und führt darüber hinaus einer wesentlichen Verbesserung des Komfortgefühls der Fahrgäste infolge des geringen Zugempfindens und der gleichmässigeren Temperaturverteilung.

**Patentansprüche**

1. Luftverteilungskanal zur Kühlung, Heizung und Belüftung des Innenraumes von klimatisierten Fahrzeugen, welcher Kanal entlang der beiden Längsseiten des Fahrzeuges verlaufend an die Klimaanlage (1) dieser Fahrzeuge angeschlossen ist und der mit nach dem Inneren des Fahrgastraumes gerichteten dachseitigen Einblaseöffnungen (7), auf die Fenster gerichteten fensterseitigen Einblaseöffnungen (9) sowie auf die Sitze der Fahrgäste gerichteten persönlichen Einblaseöffnungen (10) versehen ist, dadurch gekennzeichnet, dass der Innenraum des Luftverteilungskanals durch eine horizontal verlaufende, aus einem Material mit guter Wärmeleitfähigkeit gefertigten Trennwand (3) in einen oberen Primärkanal (4) und einen unteren Sekundärkanal (5) geteilt ist, in welchem die durch die Ventilatoren der Klimaanlage (1) gelieferte Luft im Vergleich zueinander im Gegenstrom geführt ist, wobei der Primärkanal (4) über einen den Luftstrom um 180° umlenkenden, der Klimaanlage (1) gegenüberliegenden Endbereich (6) des Luftverteilungskanals mit dem Sekundärkanal (5) verbunden ist, und wo die dachseitigen Einblaseöffnungen (7) im Primärkanal (4), während die fensterseitigen und persönlichen Einblaseöffnungen (9, 10) im Sekundärkanal (5) ausgebildet sind.

2 Luftverteilungskanal nach Anspruch 1, dadurch gekennzeichnet, dass der Primärkanal (4) eine vergrösserte konvektive Wärmeübertragungsfläche (11) aufweist.

3. Luftverteilungskanal nach Anspruch 1 oder 2, dadurch gekennzeichnet, dass entlang des Primärkanals (4) ein Kondenswasserableitkanal (12) ausgebildet ist.

4. Luftverteilungskanal nach einem der Ansprüche 1 bis 3, dadurch gekennzeichnet, dass in die Trennwand (3) des Primärkanals (4) und des Sekundärkanals (5) wenigstens ein aufklappbares Luftleitelement (13) eingebaut ist.

**Revendications**

1. Conduit de distribution d'air pour le refroidissement, le chauffage et la ventilation de l'intérieur de véhicules climatisés, ledit conduit étant connecté à l'installation de conditionnement d'air (1) de ces véhicules en s'étendant le long des deux cotés longitudinaux de véhicule, le conduit étant pourvu d'ouvertures d'insufflation (7) au niveau du toit dirigées vers l'intérieur de l'habitacle, d'ouvertures d'insufflation (9) du coté des fenêtres dirigées vers les fenêtres et d'ouvertures d'insufflation (10) personnelles dirigées vers les sièges des passagers, caractérisé en ce qu'au moyen d'une paroi de séparation horizontale en matériau à haute conductivité thermique l'espace intérieur du conduit de distribution d'air est divisé en un conduit primaire supérieur (4) et en un conduit secondaire inférieur, dans lesquels l'air produit par les ventilateurs de l'installation de conditionnement d'air (1) est guidé dans des sens mutuellement opposés, le conduit primaire (4) étant connecté au conduit secondaire (5) par une extrémité (6) du conduit de distribution d'air détournant le courant d'air de 180° et faisant face à l'installation de conditionnement d'air (1), les ouvertures d'insufflation (7) au niveau du toit, d'une part, étant formées dans le conduit primaire (4), les ouvertures d'insufflation (9) du coté des fenêtres ainsi que les ouvertures d'insufflation (10) personnelles, d'autre part, étant formées dans le conduit secondaire (5).

2. Conduit de distribution d'air selon la revendication 1, caractérisé en ce que le conduit primaire (4) comprend une surface agrandie (11) de transmission de chaleur par convection.

3. Conduit de distribution d'air selon la revendication 1 ou 2, caractérisé en ce qu'un conduit de drainage (12) pour l'eau de condensation est formé le long du conduit primaire (4).

4. Conduit de distribution d'air selon l'une quelconque des revendications 1 à 3, caractérisé en ce qu'au moins un élément repliable de guidage d'air (13) est monté dans la paroi de séparation (3) du conduit primaire (4) et du conduit secondaire (5).

**Claims**

1. An air distribution channel for cooling, heating and ventilating the interior of air-conditioned vehicles, which channel is connected to the air-conditioning equipment (1) of these vehicles while extending along the two longitudinal sides of the vehicle and is provided with roof blow-in openings (7) directed towards the interior of the seating compartment, window blow-in openings (9) directed to the windows and personal blow-in openings (10) directed to the passenger seats, characterized in that by means of a partition (3) extending horizontally and made of a material of high thermal conductivity the interior space of the air distribution channel is divided into an upper primary channel (4) and a lower secondary channel (5) in which the air supplied by the fans of the air-conditioning equipment (1) is guided in a mutual countercurrent relation, the primary channel (4) being connected with the secondary channel (5) through an end section (6) of the air distribution channel turning the air stream by 180° and facing the air-conditioning equipment (1), the roof blow-in openings (7) being formed in the primary channel (4) and the window and personal blow-in openings (9, 10), on the other hand, being formed in the secondary channel (5).

2. An air distribution channel according to claim 1, characterized in that the primary channel (4) comprises an enlarged convective heat transmission surface (11).

3. An air distribution channel according to claim 1 or 2, characterized in that a drain channel (12) for draining condensation water is formed along the primary channel (4).

4. An air distribution channel according to any of claims 1 to 3, characterized in that at least one pivoted air guiding element (13) is mounted to the partition (3) of the primary channel (4) and the secondary channel (5).

Fig.1

Fig.2

EP 0 293 433 B1